(19) **Europäisches Patentamt**
**European Patent Office**
**Office européen des brevets**

(11) **EP 3 170 065 B1**

(12) **EUROPEAN PATENT SPECIFICATION**

(45) Date of publication and mention
of the grant of the patent:
**13.11.2019 Bulletin 2019/46**

(51) Int Cl.:
***G06F 3/042*** *(2006.01)*      ***G06F 3/033*** *(2013.01)*
***G06F 3/041*** *(2006.01)*      ***G06F 3/044*** *(2006.01)*
***G06F 3/0354*** *(2013.01)*

(21) Application number: **15822007.9**

(22) Date of filing: **14.07.2015**

(86) International application number:
**PCT/KR2015/007321**

(87) International publication number:
**WO 2016/010353 (21.01.2016 Gazette 2016/03)**

(54) **DISPLAY APPARATUS AND CONTROL METHOD THEREOF**

ANZEIGEVORRICHTUNG UND STEUERUNGSVERFAHREN DAFÜR

APPAREIL D'AFFICHAGE ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2014 KR 20140089132**

(43) Date of publication of application:
**24.05.2017 Bulletin 2017/21**

(73) Proprietor: **Samsung Electronics Co., Ltd.
Gyeonggi-do 16677 (KR)**

(72) Inventors:
• **PARK, Han-jin**
**Suwon-si**
**Gyeonggi-do 443-811 (KR)**
• **MIN, Kwan-sik**
**Gunpo-si**
**Gyeonggi-do 435-705 (KR)**

(74) Representative: **Taor, Simon Edward William et al
Venner Shipley LLP
200 Aldersgate
London EC1A 4HD (GB)**

(56) References cited:
**WO-A1-2014/021479**     **WO-A2-2008/085418**
**KR-A- 20010 026 856**    **KR-A- 20110 111 110**
**US-A1- 2003 122 749**    **US-A1- 2005 200 293**
**US-A1- 2012 212 412**

• **Anonymous: "Kerr effect - Wikipedia", , 26 May
2014 (2014-05-26), XP055438511, Wikipedia
Retrieved from the Internet:
URL:https://en.wikipedia.org/w/index.php?t
itle=Kerr_effect&oldid=610171966 [retrieved on
2018-01-05]**

**Description**

[Technical Field]

Apparatuses and methods consistent with the exemplary embodiments relate to a display apparatus and a control method thereof, and more particularly to a display apparatus, which includes a touch panel and operates in response to a user's touch input, and a control method thereof.

[Background Art]

A television (TV), a smart phone, a smart pad, a tablet personal computer (PC), a mobile phone, or the like display apparatus includes a touch panel and operates by receiving a user's touch input. The touch panel is attached to a front side of the display apparatus and senses a position where it is touched by a user's finger or touch tool, thereby converting a sensing result into an electric signal. Such a touch panel has quickly replaced not only a conventional mechanical button but also an input device such as a keyboard and a mouse, and has been gradually widespread. Further, a recent trend is toward a large screen rather than a small screen for the cellular phone, the tablet PC, etc.

US 2003/122749 discloses a display that includes energy sensors. An Organic Light Emitting Diode (OLED) can be made to operate both as a light emitter and as an energy detector.

Kerr effect- Wikipedia, Wikipedia retrieved from the internet: URL:https://en.wikipedia.org/w/index.php?Title=Kerr_effect&oldid=610171966, discloses Kerr effect.

WO 2008/085418 discloses the use of one or more proximity sensors in combination with one or more touch sensors in a multi-touch panel to detect the presence of a finger.

US 2012/212412 discloses a pointing device that has a simplified configuration and that can be operated in a simple manner.

By the way, the display apparatus may be used together with a pointing device that emits light for indicating a pointing position.

As an example of the light emitted from the pointing device, a laser is used. The laser refers to a beam of consecutive light that has only one kind of wavelength and has a uniform phase . Due to properties of one wavelength and constructive interference caused by the same phase, the laser can travel very far and in a straight line without dissipating.

The pointing device of emitting the light such as the laser can be used for pointing on a medium having high reflectivity such as a screen for a projector. However, a medium having low reflectivity such as a liquid crystal display (LCD), an organic light emitting diode (OLED) or the like display apparatus cannot smoothly reflect the light of the pointing device, and therefore it is not easy for a user to find where is a pointing position on such a display apparatus . In this regard, it may be taken into account to increase the power of light, but the high power of light may injure a human's optic nerve.

[Disclosure]

Whereas a plurality of examples and/or embodiments is disclosed in the following description, it is to be noted that not all of these examples and/or embodiments are within the scope of the invention. The scope of the invention is defined by the appended independent claims. Preferred embodiments within the scope of the invention are defined by the appended dependent claims.

According to an aspect of the present invention, a display apparatus is provided according to claim 1. Preferred features of this aspect are set out in claims 2 to 5.

According to another aspect of the present invention, a method of controlling a display is provided according to claim 6.

Preferred features of this aspect are set out in claims 7 to 10.

The controller determines that an input of the pointing device is received at the light-received position if the variance in the quantity of electric charge corresponds to a first threshold, and determines that a user's touch occurs if the variance in the quantity of electric charge corresponds to a second threshold.

The controller determines properties of the received light, and performs one among a plurality of operations corresponding to an input of the pointing device at the light-received position.

The controller controls the display to display a pointer at the light-received position.

The controller performs an operation corresponding to a touch by the pointing device at the light-received position.

The controller determines that the light is received if the size of area where the quantity of electric charge is varied is equal to or higher than a predetermined size.

The method further comprises after the sensing, determining that an input of the pointing device is received at the light-received position if the variance in the quantity of electric charge corresponds to a first threshold, and determining that a user's touch occurs if the variance in the quantity of electric charge corresponds to a second threshold.

The sensing comprises determining properties of the received light, and performing one among a plurality of operations corresponding to an input of the pointing device at the light-received position.

The performing the operation corresponding to the light-received position comprises performing an operation corresponding to a touch by the pointing device at the light-received position.

The sensing comprises determining that the light is received if the size of area where the quantity of electric charge is varied is equal to or higher than a predetermined size.

**Brief Description of Drawings**

The above and/or other aspects will become apparent and more readily appreciated from the following description of exemplary embodiments, taken in conjunction with the accompanying drawings, in which:

FIG. 1 shows a display apparatus according to an exemplary embodiment;
FIG. 2 is a block diagram of the display apparatus according to an exemplary embodiment,
FIG. 3 shows a structure of a display panel and a sensor in a display according to an exemplary embodiment;
FIG. 4 shows an operation of sensing light for pointing in a partial area of the display according to an exemplary embodiment;
FIG. 5 shows an operation of sensing a user's touch in a partial area of the display according to an exemplary embodiment;
FIG. 6 shows examples of a shape of a pointer displayed corresponding to a pointing operation of a pointing device according to an exemplary embodiment;
FIG. 7 shows an example of an operation when it is determined that a touching operation is performed by the pointing device according to an exemplary embodiment;
FIG. 8 shows examples of the size of area where voltage is varied depending on light or a touch according to an exemplary embodiment; and
FIGs. 9 to 11 are flowcharts showing detailed operations of a display apparatus according to an exemplary embodiment.

**Best Mode for Carrying out the Invention**

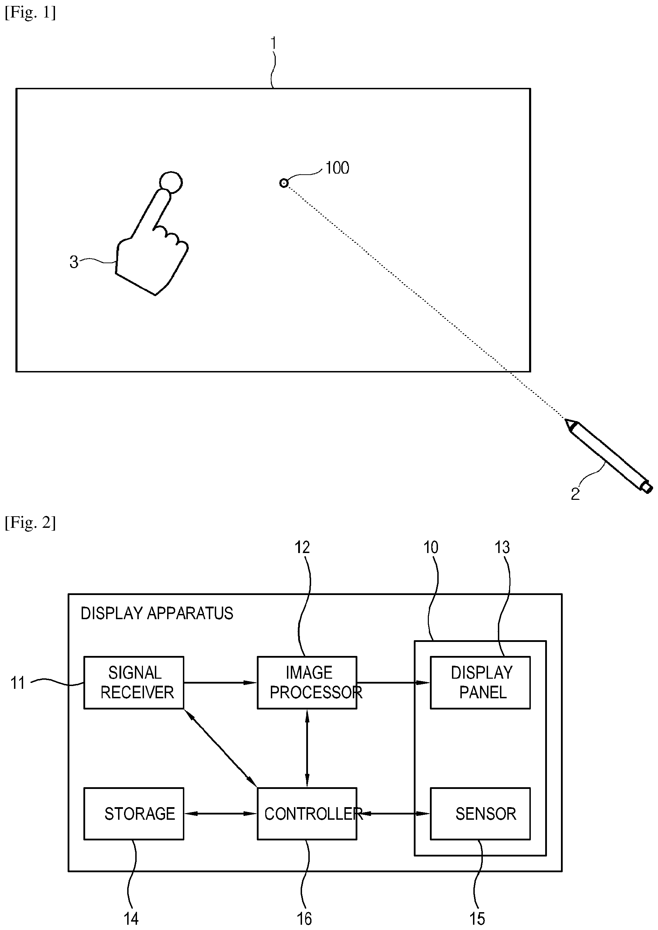

Below, exemplary embodiments will be described in detail. FIG. 1 shows a display apparatus according to an exemplary embodiment.
A display apparatus 1 according to an exemplary embodiment may sense light emitted from a pointing device 2, and determine a position at which light points, thereby operating corresponding to the pointing position. As an example of an operation corresponding to the determined pointing position, the display apparatus 1 may display a pointer 100 at the pointing position. With this, it is convenient for a user to easily find the pointing position. The display apparatus 1 may for example include a liquid crystal display (LCD), an organic light emitting diode (OLED) or the like. The pointing device 2 may emit light such as a laser. Although the display apparatus 1 has low reflectivity on a screen thereof, it may operate by sensing a position of receiving light rather than directly reflecting the light of the pointing device 2. Therefore, a user can smoothly use a pointing function even in the display apparatus using the LCD, the OLED or the like.
Further, the display apparatus 1 according to an exemplary embodiment may operate by sensing not only a pointing operation of the pointing device 2 but also a touching operation of a user 3. Thus, it is more convenient for a user since s/he can use both a pointing function and a touch function in the display apparatus 1.
FIG. 2 is a block diagram of the display apparatus according to an exemplary embodiment. The display apparatus 1 may be realized by a television (TV), a monitor for presentation, etc. The display apparatus 1 may include a signal receiver 11, an image processor 12, a display 10, a storage 14, a communicator and a controller 16.
The signal receiver 11 receives an image signal. For example, the image signal may include a broadcast signal for the TV. The broadcast signal may be broadcasted by airwaves broadcasting, cable broadcasting, satellite broadcasting, etc. The broadcast signals correspond to a plurality of channels. The signal receiver 11 may receive a broadcast signal of one channel selected by a user among the plurality of channels. Alternatively, the image signal may for example be received from a digital versatile disc (DVD) player, a Blu-ray disc (BD) player or the like imaging device; a PC; Internet or the like network; Bluetooth, Wi-Fi or the like network; and a universal serial bus (USB) storage medium or the like memory.
The image processor 12 processes the received image signal to be displayed as an image on the display 10. For example, the image processor 12 may perform image processing such as modulation, demodulation, multiplexing, demultiplexing, analog-digital conversion, digital-analog conversion, decoding, encoding, image enhancement, scaling, etc. with regard to the received image signal.
The storage 14 includes a nonvolatile memory such as a flash memory, a hard disk drive, etc., and stores data or information of a program needed for operating the display apparatus 1.
The display 10 may include a display panel 13 to display an image based on an image signal processed by the image processor 12, and a sensor 15 to sense light for pointing and a user's touch input. The display panel 13 may be variously achieved by a liquid crystal display (LCD), a plasma display panel (PDP), an organic light emitting diode (OLED), etc. to display an image.

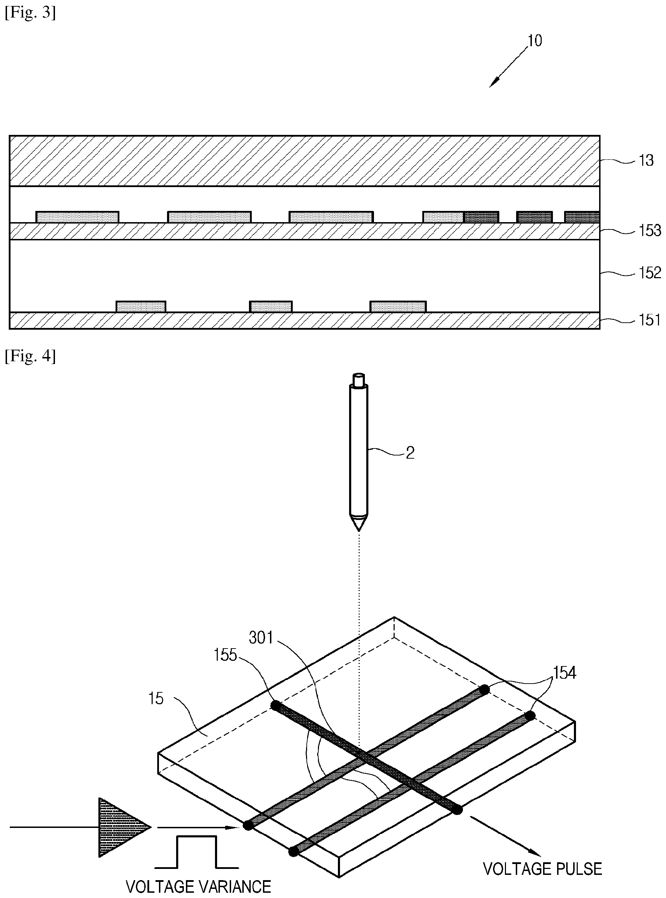

FIG. 3 shows a structure of the display panel 13 and the sensor 15 in the display 10. Referring to FIG. 3, the display 10 may include the sensor 15 that includes a transmission sensing layer 151 and a receipt sensing layer 153 to sense light for the pointing and a user's touch input, and the display panel 13 to be actually touched by a user's finger or a touch pen. In addition, an insulating layer 152 may be interposed between the transmission sensing layer 151 and the receipt sensing layer 153 and include a material varied in a dielectric constant depending on change of energy due to incident light. The material included in the insulating layer 152 may include a material that can react to a certain wavelength or convert energy of incident light into variance in a quantity of electric charge. That is, the material included in the insulating layer 152, which is changed in a refractive index and thus varied in optical properties when an electric field is applied thereto, may for example include one of compounds such as nitrobenzene($C_6H_5NO_2$), KDP($KH_2PO_4$), ADP($HN_4H_2PO_4$), BSO($Bi_{12}SiO_{20}$), BTO($Bi_{12}$ $TiO_{20}$), $LiNbO_3$, etc. Since the variance in the dielectric constant is proportional to the change in the quantity of electric charge or the change in an electric field, it is possible to determine a position, where the light is received, on the basis of the change in the quantity of electric charge due to the dielectric constant varied depending on the received optical energy. The display 10 has a glass film film (GFF) or glass to glass (G2) structure using transparent electrode such as indium tin oxide (ITO), metal mesh, an Ag-nano wire, and etc, or a structure where conductive materials are arrayed on a substrate of materials such as an opaque and flexible film, and may be achieved in the form of a flexible printed circuit board (FPCB).

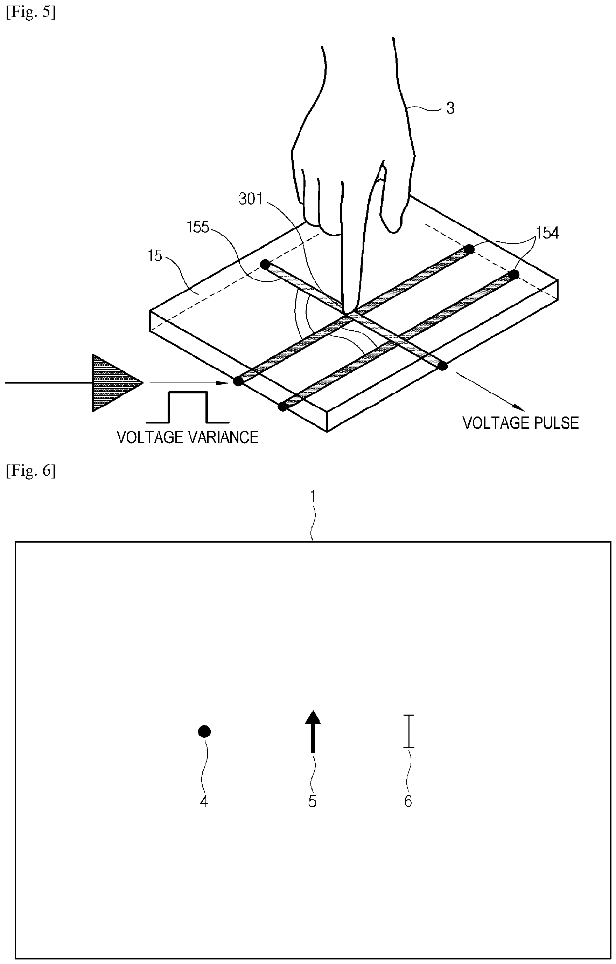

FIGs. 4 and 5 show partial areas of the display 10. Referring to FIGs. 4 and 5, the transmission sensing layer 151 includes a plurality of pulse transmitting lines 154 for transmitting a voltage pulse, and the receipt sensing layer 153 includes a plurality of receiving lines 155 respectively intersecting the plurality of pulse transmitting lines 154. The number of pulse transmitting lines 154 and the number of receiving lines 155 may be varied depending on a screen size of the display. For example, dozens of pulse transmitting lines 154 and dozens of receiving lines 155 may be provided.

The controller 16 transmits a voltage pulse having a predetermined level to the plurality of pulse transmitting lines 154. When the voltage pulse is applied to the pulse transmitting line 154, an electromagnetic field is formed between the pulse transmitting line 154 and the receiving line 155, thereby inducing a coupling voltage having a predetermined level in the receiving line 155.

First, an operation of sensing the light for the pointing will be described. Referring to FIG. 4, when the light emitted from the pointing device 2 enters a predetermined position 301 of the display panel 13 of the display 10, the change in optical energy occurs at the incident light position 301. Further, the change in the energy due to the incident light causes the dielectric constant in the insulating layer 152 to be varied. The variance in the dielectric constant of the material in the insulating layer 152 can be expressed by the following equations.

[Equation 1]

$$c = \frac{\varepsilon A}{d} = \frac{Q}{V}$$

[Equation 2]

$$c = \frac{1}{\sqrt{\varepsilon_o \mu_o}}$$

$$n = \frac{c_o}{c} = \frac{\sqrt{\varepsilon\mu}}{\sqrt{\varepsilon_o \mu_o}}$$

$$n^2 = k\varepsilon$$

[Equation 3]

$$Xn = \lambda_o K |E|^2$$

The Equation 1 shows that variance in quantity (Q) of electric charge is proportional to variance in an electric field and capacitance (C), the Equation 2 shows that a dielectric constant ($\varepsilon$) is proportional to the square of a refractive index (n) of a medium, and the Equation 3 shows the Kerr electro-optic effect that the refractive index (n) is varied in proportion to the square of applied electric field (E).

Referring to the Equations 1 to 3, the variance in the electric field due to the light in the insulating layer 152 causes the refractive index to be varied in the material (medium) of the insulating layer 152, and the variance in the refractive index leads to the variance in the dielectric constant of the material in the insulating layer 152. Accordingly, the capacitance is varied in the insulating layer 152 between the transmission sensing layer 151 and the receipt sensing layer 153, and it is therefore possible to determine the incident light position by sensing the variance in the capacitance of the insulating layer 152.

The variance in the dielectric constant of the insulating layer 152 leads to the variance in the quantity of electric charge at the incident light position 301. For example, the quantity of electric charge may increase or the electric field may become stronger at the incident light position 301. If the quantity of electric charge increases or the electric field becomes stronger at the incident light position 301, such variance in the energy/quantity of electric charge/electric field causes variance in voltage of the receiving line 155, and it is therefore possible to determine the incident light position 301 based on the variance in the voltage.

Second, an operation of sensing a touch of a user 3 will be described. Referring to FIG. 5, when a hand of a user 3 approaches a predetermined position 301 on the display panel 13, a part of the electric field is absorbed in the hand of the user 3 and flows out, and thus the capacitance between the transmission sensing layer 151 and the receipt sensing layer 153 decreases as much as the electric field flows out, thereby decreasing total energy received in the receiving line 155. Such variance in the energy causes variance in voltage of the receiving line 155, and it is therefore possible to determine a touch position 301 based on the variance in the voltage.

The display apparatus 1 determines whether the variance in the energy/quantity of electric charge/electric field/voltage (hereinafter, referred to as the 'voltage') sensed by the sensor 15 is caused by the light or a user's touch. To this end, the display apparatus 1 may use different thresholds to distinguish between the light and the user's touch. For example, if the variance in the voltage sensed at the position 301 corresponds to a first threshold, it is determined that the variance is caused by the light. On the other hand, if the variance in the voltage corresponds to a second threshold, it is determined that the variance is caused by a user's touch. Specifically, the first threshold for determining the light may be higher than the second threshold for determining the user's touch. If the variance in the voltage at the position 301 is equal to or higher than the first threshold higher than a reference voltage (e.g., 2.5[V]), it is determined that the variance is caused by light. If the variance in the voltage at the position 301 is lower than the second threshold lower than the reference voltage, it is determined that the variance is caused by a user's touch.

If it is determined that the variance in the voltage sensed by the sensor 15 is caused by the light, the display apparatus 1 may perform one among a plurality of operations corresponding to an input from the pointing device 2. The display apparatus 1 may determine the properties of the received light and determine one among the plurality of operations of the pointing device 2. For example, the display apparatus 1 may determine that a pointing operation of the pointing device 2 is performed at the light-received position as one of the plurality of operations of the pointing device 2. FIG. 6 shows examples of the pointer according to an exemplary embodiment. The display apparatus 1 may display the pointer 4 to 6 in various forms to indicate that the position corresponding to the light received by the pointing operation of the pointing device 2 is pointed. For example, the pointer may have a shape of a dot 4, an arrow 5, a cursor 6 or the like.

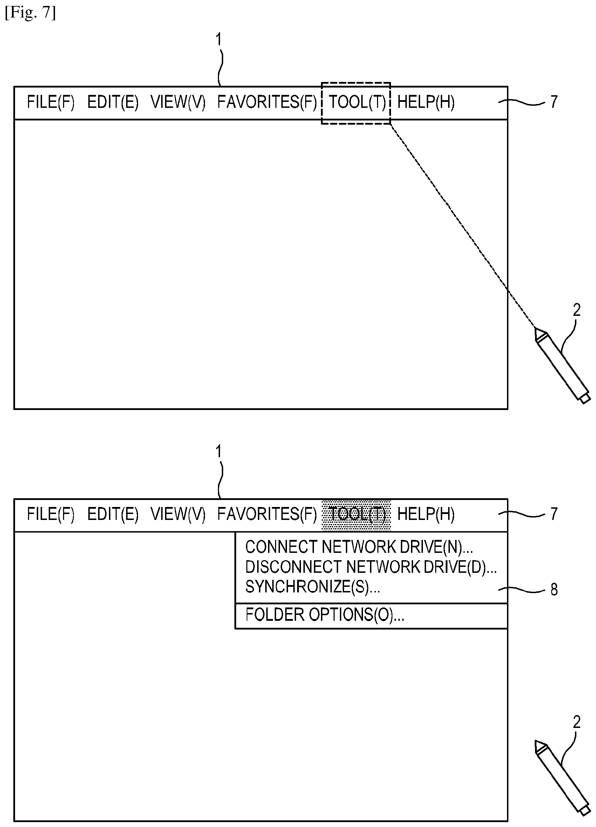

Alternatively, the display apparatus 1 may determine that the touching operation is performed by the pointing device 2 at the light-received position as one of the plurality of operations of the pointing device 2. The display apparatus 1 may determine the properties of the received light and determine whether the touching operation is performed by the pointing device 2. For example, referring to FIG. 7, the display apparatus 1 may display a plurality of selectable user interface (UI) items 7 on the display 10. If a predetermined period of time elapses in a state that the light output from the pointing device 2 points one among the plurality of UI items 7, the display apparatus 1 may determine that the touching operation of the pointing device 2 is performed with regard to the corresponding item. If it is determined that the touching operation is performed by the pointing device 2, the display apparatus 1 may display a popup window 8 of the corresponding item as shown in FIG. 7. Alternatively, the pointing device 2 may have a function of turning on/off its own light in response to a user's control. In this case, if the light pointing one item displayed on the display 10 is turned on and then off, the display apparatus 1 may determine that the touching operation is performed with regard to the corresponding item.

Alternatively, a user may make a predetermined gesture together with the pointing device 2. In this case, if a trace of light continuously received with regard to one item displayed on the display 10 forms a predetermined pattern, the display apparatus 1 may determine that the touching operation is performed with regard to the corresponding item. Alternatively, the pointing device 2 may adjust the intensity of the output light in response to a user's control, and the display apparatus 1 may determine that the touching operation is performed with regard to one item displayed on the display 10 in accordance with the intensity of light received with regard to the corresponding item. For example, the display apparatus 1 may determine that the pointing operation is performed with regard to one item if the intensity of the light received corresponds to a first intensity, and may determine that the touching operation is performed with regard to the corresponding item if the intensity of the received light corresponds to a second intensity higher than the first intensity.

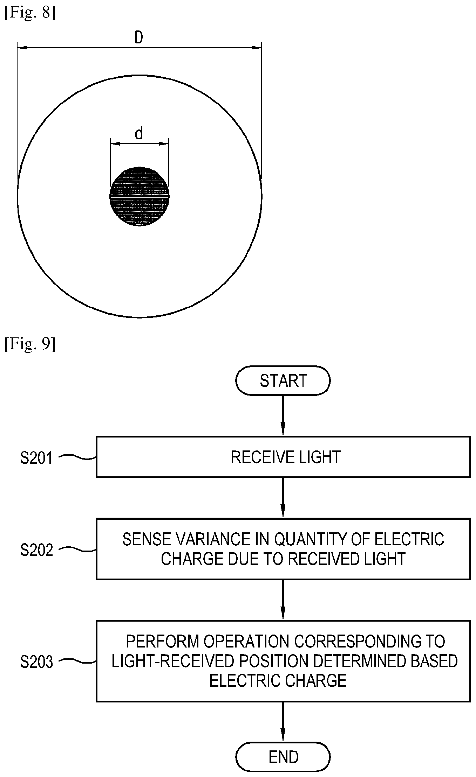

The display apparatus 1 may determine whether the variance in the voltage sensed by the sensor 15 is caused by the light for the pointing or by a user's touch, based on the size of area where the variance occurs. FIG. 8 shows examples of the size of area where voltage is varied depending on light or a touch according to an exemplary embodiment. As shown therein, the size of area D where the voltage is varied depending on a user's touch may be relatively larger than the size of area d where the voltage is varied depending on the light. Therefore, the controller 16 can determine whether information received through the display panel 13 is caused by the light from the pointing device 2 or a touch of a user 3, based on the size of area where the variance in the voltage is sensed by the sensor 15. For example, if the size of area where the variance in the voltage is sensed by the sensor 15 is equal to or larger than a first size D, it is determined that the variance is caused by a user's touch. On the other hand, if the size of area where the variance in the voltage is sensed by the sensor 15 is equal to or larger than a second size d but smaller than the first size D, it is determined that the variance is caused by the light of the pointing device 2.

FIG. 9 is a flowchart showing operations of the display apparatus 1 according to an exemplary embodiment. Referring to FIG. 9, it will be described that the display apparatus 1 operates by sensing the light output from the pointing device 2. First, at operation S201, the display 10 receives the light from the pointing device 2. Next, at operation S202, the sensor 15 of the display apparatus 1 senses variance in voltage increased by the optical energy. Next, at operation S203, the controller 16 performs the pointing operation or the touching operation corresponding to the position where the light is received on the display 10, based on the variance in the voltage sensed by the sensor 15.

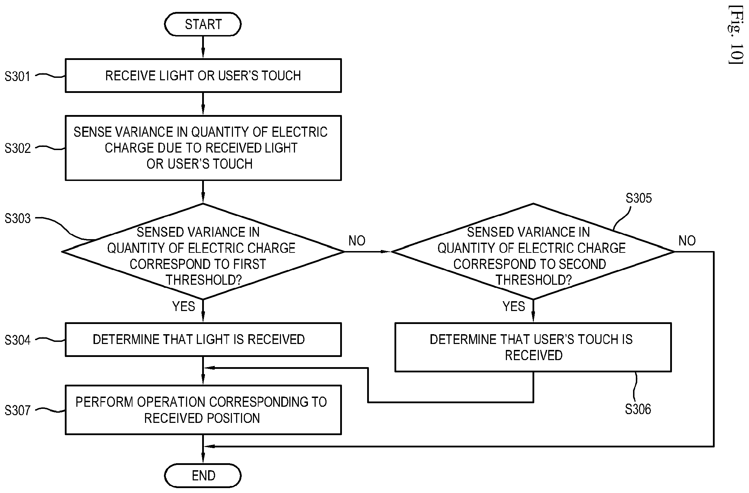

FIG. 10 is a flowchart showing operations of the display apparatus 1 according to another exemplary embodiment. Referring to FIG. 10, it will be described that the display apparatus 1 according to an exemplary embodiment operates by sensing the light output from the pointing device 2 or a user's touch. First, at operation S301, the display 10 receives the light output from the pointing device 2 or a user's touch. Next, at operation S302, the sensor 15 senses variance in voltage increased or decreased by the received light or the user's touch. Next, at operation S303, the controller 16 determines whether the variance in the voltage corresponds to the first threshold. If the variance in the voltage corresponds to the first threshold, the controller 16 determines that an input of the pointing device 2 is received at the light-received position (S304), and performs the relevant pointing or touching operation at the corresponding position (S307). On the other hand, if the variance in the voltage does not correspond to the first threshold, it is determined whether the variance in the voltage corresponds to the second threshold (S305). If the variance in the voltage corresponds to the second threshold, the controller 16 determines that the user's touch is received (S306) and performs the operation relevant to the user's touch at the corresponding position (S307).

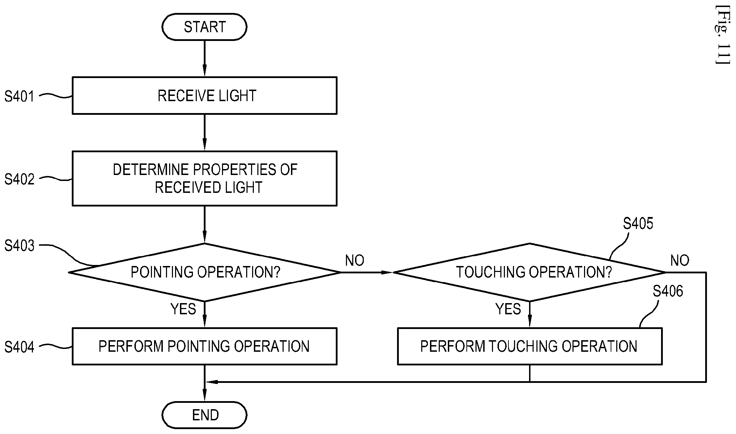

FIG. 11 is a flowchart showing operations of the display apparatus 1 according to still another exemplary embodiment. Referring to FIG. 11, it will be described that the display apparatus 1 according to an exemplary embodiment determines the properties of the received light and performs one among the plurality of operations corresponding to the input of the pointing device 2 at the light-received position. First, at operation S401, the display 10 receives the light output from the pointing device 2. The controller 16 determines the properties of the received light (S402), and thus determines whether the properties of the light correspond to the pointing operation (S403). If the properties of the received light correspond to the pointing operation, the relevant pointing operation is performed at the corresponding position (S404). If the properties of the received light correspond to the touching operation (S405). If the properties of the received light correspond to the touching operation, the relevant touching operation is performed at the corresponding position (S406).

As described above, according to an exemplary embodiment, a pointing function of a pointing device that emits light such as a laser can be smoothly implemented in a display apparatus with a touch panel.

Further, in the display apparatus with the touch panel, a touch function of the touch panel can be used together with a pointing function of a pointing device that emits light.

The scope of the invention is defined in the appended claims.

## Claims

1. A display apparatus (1) comprising:

   a display (10) configured to comprise a display panel that displays an image, and a sensor (15) that comprises a medium (152) disposed between a first electrode and a second electrode where an electric field is formed, wherein the sensor (15) senses a variance in a quantity of electric charge caused by a variance in capacitance between the first electrode and the second electrode which occurs as light output from a pointing device (2) affects the medium (152); and a controller (16) configured to determine a position where the light is received on the display (10) based on the variance in the quantity of electric charge sensed by the sensor (15) and perform an operation corresponding to the determined position; **characterised in that** the medium (152) comprises an insulating layer that contains a material of which a refractive index is varied depending on a variance in the electric field due to the received light; wherein the variance in the refractive index causes a variance in a dielectric constant of the material which leads to the variance in the capacitance between the first electrode and the second electrode.

2. The display apparatus (1) according to claim 1, wherein the controller determines that an input of the pointing device (2) is received at the determined position if the variance in the quantity of electric charge corresponds to a first threshold, and determines that a user's touch occurs if the variance in the quantity of electric charge corresponds to a second threshold.

3. The display apparatus (1) according to claim 1, wherein the controller performs one among a plurality of operations corresponding to an input of the pointing device (2) at the determined position.

4. The display apparatus (1) according to claim 3, wherein the controller controls the display to display a pointer at the determined position.

**5.** The display apparatus (1) according to claim 1, wherein the controller identifies that the light is received if the size of an area where the quantity of electric charge is varied is equal to or higher than a predetermined size.

**6.** A control method of a display apparatus (1), the method comprising:

receiving light output from a pointing device (2) in a display (10) that displays an image;

sensing a variance in a quantity of electric charge caused by a variance in capacitance between a first electrode and a second electrode which occurs as the light output from the pointing device (2) affects a medium (152) disposed between the first electrode and the second electrode; and

performing an operation corresponding to a position where the light is received on the display (10) based on the sensed variance in the quantity of electric charge;

**characterised in that**

the medium (152) comprises an insulating layer that contains a material of which a refractive index is varied depending on a variance in the electric field due to the received light; wherein the variance in the refractive index causes a variance in a dielectric constant of the material which leads to the variance in the capacitance between the first electrode and the second electrode.

**7.** The method according to claim 6, further comprising:

after the sensing,

determining that an input of the pointing device is received at the position if the variance in the quantity of electric charge corresponds to a first threshold, and determining that a user's touch occurs if the variance in the quantity of electric charge corresponds to a second threshold.

**8.** The method according to claim 6, wherein the sensing comprises performing one among a plurality of operations corresponding to an input of the pointing device (2) at the position.

**9.** The method according to claim 8, wherein the performing the operation corresponding to the position comprises displaying a point at the position.

**10.** The method according to claim 6, wherein the sensing comprises determining that the light is received if the size of an area where the quantity of electric charge is varied is equal to or higher than a predetermined size.

**Patentansprüche**

**1.** Anzeigevorrichtung (1), die Folgendes aufweist:

eine Anzeige (10), die so konfiguriert ist, dass sie eine Anzeigetafel, die ein Bild anzeigt, und einen Sensor (15), der ein Medium (152) aufweist, das zwischen einer ersten Elektrode und einer zweiten Elektrode angeordnet ist, wo ein elektrisches Feld gebildet wird, aufweist, wobei der Sensor (15) eine Veränderung einer elektrischen Ladungsmenge erfasst, die durch eine Veränderung der Kapazität zwischen der ersten Elektrode und der zweiten Elektrode verursacht wird, die auftritt, wenn von einem Zeigegerät (2) ausgegebenes Licht das Medium (152) beeinflusst; und

eine Steuereinheit (16), die konfiguriert ist zum Bestimmen einer Position, wo das Licht auf der Anzeige (10) erhalten wird, auf Basis der Veränderung der elektrischen Ladungsmenge, die vom Sensor (15) erfasst wird, und zum Durchführen einer der vorbestimmten Position entsprechenden Operation;

**dadurch gekennzeichnet, dass**

das Medium (152) eine isolierende Schicht aufweist, die ein Material enthält, bei dem eine Brechzahl in Abhängigkeit von einer Veränderung des elektrischen Felds aufgrund des erhaltenen Lichts verändert wird; wobei die Veränderung der Brechzahl eine Veränderung einer Dielektrizitätskonstante des Materials verursacht, die zur Veränderung der Kapazität zwischen der ersten Elektrode und der zweiten Elektrode führt.

**2.** Anzeigevorrichtung (1) nach Anspruch 1, wobei die Steuereinheit bestimmt, dass eine Eingabe des Zeigegeräts (2) an der bestimmten Position erhalten wird, falls die Veränderung der elektrischen Ladungsmenge einem ersten Schwellenwert entspricht, und bestimmt, dass die Berührung eines Benutzers stattfindet, wenn die Veränderung der elektrischen Ladungsmenge einem zweiten Schwellenwert entspricht.

**3.** Anzeigevorrichtung (1) nach Anspruch 1, wobei die Steuereinheit eine unter mehreren Operationen durchführt, die einer Eingabe des Zeigegeräts (2) an der bestimmten Position entspricht.

**4.** Anzeigevorrichtung (1) nach Anspruch 3, wobei die Steuereinheit die Anzeige zum Anzeigen eines Zeigers an der bestimmten Position steuert.

**5.** Anzeigevorrichtung (1) nach Anspruch 1, wobei die Steuereinheit feststellt, dass das Licht erhalten wird, wenn die Größe eines Bereichs, wo die elektrische Ladungsmenge verändert wird, größer oder gleich einer vorbestimmten Größe ist.

**6.** Steuerverfahren einer Anzeigevorrichtung (1), wobei das Verfahren Folgendes aufweist:

Erhalten von aus einem Zeigegerät (2) ausgegebenem Licht in einer Anzeige (10), die ein Bild anzeigt;

Erfassen einer Veränderung einer elektrischen Ladungsmenge, die durch eine Veränderung der Kapazität zwischen einer ersten Elektrode und einer zweiten Elektrode verursacht wird, die auftritt, wenn vom Zeigegerät (2) ausgegebenes Licht ein Medium (152) beeinflusst, das zwischen der ersten Elektrode und der zweiten Elektrode angeordnet ist; und

Durchführen einer Operation, die einer Position entspricht, wo das Licht auf der Anzeige (10) erhalten wird, auf Basis der erfassten Veränderung der elektrischen Ladungsmenge; **dadurch gekennzeichnet, dass**

das Medium (152) eine isolierende Schicht aufweist, die ein Material enthält, bei dem eine Brechzahl in Abhängigkeit von einer Veränderung im elektrischen Feld aufgrund des erhaltenen Lichts verändert wird; wobei die Veränderung der Brechzahl eine Veränderung einer Dielektrizitätskonstante des Materials verursacht, die zur Veränderung der Kapazität zwischen der ersten Elektrode und der zweiten Elektrode führt.

**7.** Verfahren nach Anspruch 6, das ferner Folgendes aufweist:

nach dem Erfassen

Bestimmen, dass eine Eingabe des Zeigegeräts an der Position empfangen wird, falls die Veränderung der elektrischen Ladungsmenge einem ersten Schwellenwert entspricht, und Bestimmen, dass die Berührung eines Benutzers stattfindet, wenn die Veränderung der elektrischen Ladungsmenge einem zweiten Schwellenwert entspricht.

**8.** Verfahren nach Anspruch 6, wobei das Erfassen das Durchführen von einer unter mehreren Operationen aufweist, die einer Eingabe des Zeigegeräts (2) an der Position entspricht.

**9.** Verfahren nach Anspruch 8, wobei das Durchführen der Operation, die der Position entspricht, das Anzeigen eines Punkts an der Position aufweist.

**10.** Verfahren nach Anspruch 6, wobei das Erfassen das Bestimmen aufweist, dass das Licht erhalten wird, wenn die Größe eines Bereichs, wo die elektrische

**Revendications**

**1.** Appareil d'affichage (1) comprenant :

un afficheur (10) configuré pour comprendre un panneau d'affichage qui affiche une image, et un capteur (15) qui comprend un support (152) disposé entre une première électrode et une seconde électrode où un champ électrique est formé,

dans lequel

le capteur (15) détecte une variation d'une quantité de charge électrique causée par une variation de capacité entre la première électrode et la seconde électrode qui se produit quand une sortie de lumière depuis un dispositif de pointage (2) affecte le support (152) ;

et

un contrôleur (16) configuré pour déterminer une position où la lumière est reçue sur l'afficheur (10) en fonction de la variation de la quantité de charge électrique détectée par le capteur (15) et réaliser une opération correspondant à la position déterminée ; **caractérisé en ce que** le support (152) comprend une couche isolante qui contient un matériau dont un indice de réfraction varie en fonction d'une variation du champ électrique due à la lumière reçue ; dans lequel la variation de l'indice de réfraction entraîne une variation d'une constante diélectrique du matériau qui conduit à la variation de la capacité entre la première électrode et la seconde électrode.

**2.** Appareil d'affichage (1) selon la revendication 1, dans lequel le contrôleur détermine qu'une entrée du dispositif de pointage (2) est reçue à la position déterminée si la variation de la quantité de charge électrique correspond à un premier seuil, et détermine qu'un toucher d'utilisateur se produit si la variation de la quantité de charge électrique correspond à un second seuil.

**3.** Appareil d'affichage (1) selon la revendication 1, dans lequel le contrôleur réalise une d'une pluralité d'opérations correspondant à une entrée du dispositif de pointage (2) à la position déterminée.

**4.** Appareil d'affichage (1) selon la revendication 3, dans lequel le contrôleur commande l'afficheur pour afficher un pointeur à la position déterminée.

**5.** Appareil d'affichage (1) selon la revendication 1, dans lequel le contrôleur identifie que la lumière est reçue si la taille d'une zone où la quantité de charge électrique varie est égale ou supérieure à une taille prédéterminée.

6. Procédé de commande d'un appareil d'affichage (1), le procédé comprenant :

la réception d'une sortie de lumière depuis un dispositif de pointage (2) dans un afficheur (10) qui affiche une image ;
la détection d'une variation d'une quantité de charge électrique causée par une variation de capacité entre une première électrode et une seconde électrode qui se produit quand la sortie de lumière du dispositif de pointage (2) affecte un support (152) disposé entre la première électrode et la seconde électrode ; et
la réalisation d'une opération correspondant à une position où la lumière est reçue sur l'afficheur (10) en fonction de la variation détectée de la quantité de charge électrique ;
**caractérisé en ce que**
le support (152) comprend une couche isolante qui contient un matériau dont un indice de réfraction varie en fonction d'une variation du champ électrique due à la lumière reçue ; dans lequel la variation de l'indice de réfraction entraîne une variation d'une constante diélectrique du matériau qui conduit à la variation de la capacité entre la première électrode et la seconde électrode.

7. Procédé selon la revendication 6, comprenant en outre :

après la détection,
la détermination qu'une entrée du dispositif de pointage est reçue à la position si la variation de la quantité de charge électrique correspond à un premier seuil, et la détermination qu'un toucher d'utilisateur se produit si la variation de la quantité de charge électrique correspond à un second seuil.

8. Procédé selon la revendication 6, dans lequel la détection comprend la réalisation d'une d'une pluralité d'opérations correspondant à une entrée du dispositif de pointage (2) à la position.

9. Procédé selon la revendication 8, dans lequel la réalisation de l'opération correspondant à la position comprend l'affichage d'un point à la position.

10. Procédé selon la revendication 6, dans lequel la détection comprend la détermination que la lumière est reçue si la taille d'une zone où la quantité de charge électrique varie est égale ou supérieure à une taille prédéterminée.

[Fig. 1]

[Fig. 2]

[Fig. 3]

10

13

153

152

151

[Fig. 4]

2

301

155

154

15

VOLTAGE PULSE

VOLTAGE VARIANCE

[Fig. 5]

VOLTAGE VARIANCE

VOLTAGE PULSE

[Fig. 6]

[Fig. 7]

1

| FILE(F) | EDIT(E) | VIEW(V) | FAVORITES(F) | TOOL(T) | HELP(H) |

7

2

1

| FILE(F) | EDIT(E) | VIEW(V) | FAVORITES(F) | TOOL(T) | HELP(H) |

7

CONNECT NETWORK DRIVE(N)...
DISCONNECT NETWORK DRIVE(D)...
SYNCHRONIZE(S)...

8

FOLDER OPTIONS(O)...

2

[Fig. 8]

D

d

[Fig. 9]

START

S201 — RECEIVE LIGHT

S202 — SENSE VARIANCE IN QUANTITY OF ELECTRIC CHARGE DUE TO RECEIVED LIGHT

S203 — PERFORM OPERATION CORRESPONDING TO LIGHT-RECEIVED POSITION DETERMINED BASED ELECTRIC CHARGE

END

[Fig. 10]

START

S301 — RECEIVE LIGHT OR USER'S TOUCH

S302 — SENSE VARIANCE IN QUANTITY OF ELECTRIC CHARGE DUE TO RECEIVED LIGHT OR USER'S TOUCH

S303 — SENSED VARIANCE IN QUANTITY OF ELECTRIC CHARGE CORRESPOND TO FIRST THRESHOLD?

NO →

S305 — SENSED VARIANCE IN QUANTITY OF ELECTRIC CHARGE CORRESPOND TO SECOND THRESHOLD?

NO

YES → S306 — DETERMINE THAT USER'S TOUCH IS RECEIVED

S303 YES → S304 — DETERMINE THAT LIGHT IS RECEIVED

S307 — PERFORM OPERATION CORRESPONDING TO RECEIVED POSITION

END

[Fig. 11]

START

S401 → RECEIVE LIGHT

S402 → DETERMINE PROPERTIES OF RECEIVED LIGHT

S403 → POINTING OPERATION?

YES → S404 → PERFORM POINTING OPERATION

NO → S405 → TOUCHING OPERATION?

YES → S406 → PERFORM TOUCHING OPERATION

NO

END

**EP 3 170 065 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003122749 A
- WO 2008085418 A
- US 2012212412 A

### Non-patent literature cited in the description

- *Kerr effect- Wikipedia, https://en.wikipedia.org/w/index.php? Title=Kerr_effect&oldid=610171966*